# EUROPEAN PATENT APPLICATION

(11) **EP 4 631 485 A1**
(43) Date of publication of application: **15.10.2025**
(21) Application number: 24826131.5
(22) Date of filing: 17.05.2024
(51) Int. Cl.: A61H 3/00, A61H 1/02, B25J 9/00, B25J 9/16

(54) **WEARABLE DEVICE AND OPERATING METHOD THEREOF**

(30) Priority: 19.06.2023 KR 20230078191
(71) Applicant: Samsung Electronics Co., Ltd., Suwon-si, Gyeonggi-do 16677 (KR)
(72) Inventor: HAN, Seungil, Suwon-si Gyeonggi-do 16677 (KR); LEE, Seokjae, Suwon-si Gyeonggi-do 16677 (KR); JANG, Kyunghun, Suwon-si Gyeonggi-do 16677 (KR); KIM, Sungcheol, Suwon-si Gyeonggi-do 16677 (KR); SONG, Sukhoon, Suwon-si Gyeonggi-do 16677 (KR); YOON, Sangsik, Suwon-si Gyeonggi-do 16677 (KR)
(74) Representative: Gulde & Partner
(86) International application number: PCT/KR2024/006701
(87) International publication number: WO 2024/262809

(57) **Abstract**

This wearable device worn on the body of a user may comprise: a driving module for generating torque; an angle sensor, which senses movement of the joints of the user so as to acquire at least one angular acceleration value; and a processor(s) for controlling the driving module such that the driving module generates the torque, receiving the acquired at least one angular acceleration value from the angle sensor, determining, on the basis of the received at least one angular acceleration value, whether degradation of the driving module has occurred at a predetermined level or higher, and controlling that a notification of the degradation of the driving module is provided to the user if it is determined that the degradation has occurred at the predetermined level or higher.

## Description

### BACKGROUND

### 1. Field

An example embodiment relate to a wearable device and/or an operating method thereof.

### 2. Description of Related Art

In general, a walking assistance device may refer to a mechanism or device that helps a person exercise and/or that helps a patient, who cannot walk on his own due to various diseases, accidents, and the like, to perform walking exercises for rehabilitation treatment. With the recent intensifying aging societies, a growing number of people experience inconvenience in walking or have difficulty in normal walking due to malfunctioning joint issues, and there is increasing interest in walking assistance devices. A walking assistance device is to be worn on a body of a user to assist the user with exercise and/or walking, such as by providing a desired or necessary muscular strength and to induce the user to walk in a normal walking pattern.

### SUMMARY

According to an example embodiment, a wearable device to be worn on a body of a user may include a driving module configured to generate a torque, an angle sensor configured to obtain at least one angular acceleration value by sensing a motion of a joint of the user, and at least one processor comprising processing circuitry. The at least one processor may control the driving module to generate the torque. The at least one processor may receive the obtained at least one angular acceleration value from the angle sensor. The at least one processor may determine whether a degradation of the driving module occurs at a predetermined level or higher based on the received at least one angular acceleration value. The at least one processor may control to provide a notification about the degradation to the user in response to the determination that the degradation occurs at the predetermined level or higher.

According to an example embodiment, a wearable device to be worn on a body of a user may include a driving module configured to generate a torque, an angle sensor configured to obtain angular acceleration values by sensing a motion of a joint of the user, and at least one processor comprising processing circuitry. The processor(s) may control the driving module to generate the torque. The processor(s) may receive the obtained angular acceleration values from the angle sensor. The processor(s) may determine a feature value based on at least one of the received angular acceleration values. The processor(s) may determine an increase rate of the determined feature value compared to a reference angular acceleration value. The processor(s) may determine whether a degradation of the driving module occurs at a predetermined level or higher based on the determined increase rate. The processor(s) may control to provide a notification about the degradation to the user in response to the determination that the degradation occurs at the predetermined level or higher.

According to an example embodiment, an operating method of a wearable device to be worn on a body of a user may include generating a torque and transmitting the generated torque to a leg of the user, obtaining at least one angular acceleration value by sensing a motion of a joint of the user, determining whether a degradation of a driving module of the wearable device occurs at a predetermined level or higher based on the obtained at least one angular acceleration value, and providing a notification about the degradation when the degradation occurs at the predetermined level or higher.

### BRIEF DESCRIPTION OF THE DRAWINGS

The above and other aspects, features, and advantages of certain embodiments of the present disclosure will be more apparent from the following detailed description, taken in conjunction with the accompanying drawings, in which:
FIG. 1A is a diagram illustrating an overview of a wearable device worn on a body of a user according to an example embodiment;
FIG. 1B is a diagram illustrating an example of a system including a wearable device according to an example embodiment;
FIG. 2A is a rear schematic view of a wearable device according to an example embodiment;
FIG. 2B is a left side view of a wearable device according to an example embodiment;
FIGS. 3A and 3B are block diagrams illustrating examples of a configuration of a wearable device according to an example embodiment;
FIG. 4 is a diagram illustrating an interaction between a wearable device and an electronic device according to an example embodiment;
FIGS. 5 to 7 are diagrams illustrating an example of an operating method of a wearable device according to an example embodiment;
FIG. 8 is a diagram illustrating another example of an operating method of a wearable device according to an example embodiment;
FIG. 9 is a diagram illustrating another example of an operation of a wearable device according to an example embodiment;
FIGS. 10 and 11 are diagrams illustrating another example of an operation of a wearable device according to an example embodiment;
FIG. 12 is a diagram illustrating another example of an operation of a wearable device according to an example embodiment; and
FIG. 13 is a flowchart illustrating an example of an operating method of a wearable device according to an example embodiment.

### DETAILED DESCRIPTION

The following detailed structural or functional description is provided as an example only and various alterations and modifications may be made to the embodiments. Here, the embodiments are not construed as limited to the disclosure and should be understood to include all changes, equivalents, and replacements within the idea and the technical scope of the disclosure.

Terms, such as first, second, and the like, may be used herein to describe components. Each of these terminologies is not used to define an essence, order or sequence of a corresponding component but used merely to distinguish the corresponding component from other component(s). For example, a first component may be referred to as a second component, and similarly the second component may also be referred to as the first component.

It should be noted that if it is described that one component is "connected", "coupled", or "joined" to another component, at least a third component(s) may be "connected", "coupled", and "joined" between the first and second components, although the first component may be directly connected, coupled, or joined to the second component.

As used herein, the singular forms "a", "an", and "the" include the plural forms as well, unless the context clearly indicates otherwise. It will be further understood that the terms "comprises/comprising" and/or "includes/including" when used herein, specify the presence of stated features, integers, steps, operations, elements, and/or components, but do not preclude the presence or addition of one or more other features, integers, steps, operations, elements, components and/or groups thereof.

Unless otherwise defined, all terms, including technical and scientific terms, used herein have the same meaning as commonly understood by one of ordinary skill in the art to which this disclosure pertains. Terms, such as those defined in commonly used dictionaries, are to be interpreted as having a meaning that is consistent with their meaning in the context of the relevant art, and are not to be interpreted in an idealized or overly formal sense unless expressly so defined herein.

Hereinafter, embodiments will be described in detail with reference to the accompanying drawings. When describing the embodiments with reference to the accompanying drawings, like reference numerals refer to like elements and any repeated description related thereto will be omitted.

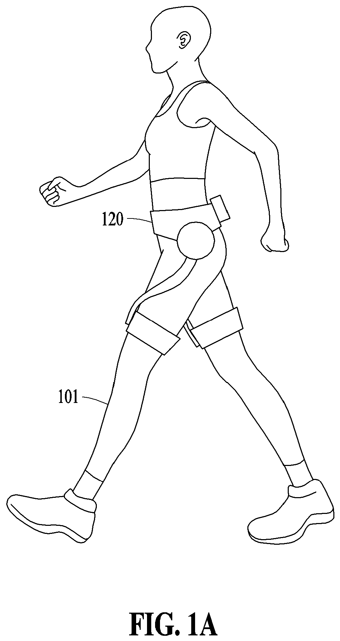

FIG. 1A is a diagram illustrating an overview of a wearable device worn on a body of a user according to an embodiment.

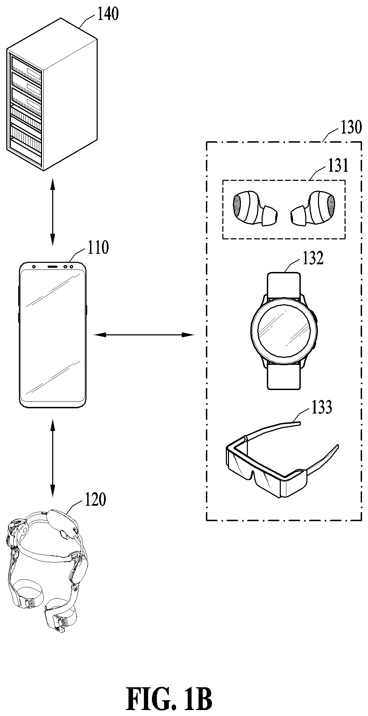

Referring to FIG. 1, a wearable device 120 may be a device worn on a body of a user 101 to assist the user 101 in walking, exercising, and/or working. In embodiments, the term "wearable device" may be replaced with "wearable robot," "walking assistance device," or "exercise assistance device". The user 101 may be a human or an animal, but is not limited thereto. The wearable device 120 may be worn on a body (e.g., a lower body (the legs, ankles, knees, etc.), an upper body (the torso, arms, wrists, etc.), or the waist) of the user 101 to provide an external force such as an assistance force and/or a resistance force to a body motion of the user 101. The assistance force may be a force applied in the same direction as the body motion direction of the user 101, and the resistance force may be a force applied in a direction opposite to the body motion direction of the user 101. The term "resistance force" may also be referred to as "exercise load".

When the wearable device 120 performs a walking assist function to assist the user 101 in walking, the wearable device 120 may assist a portion or entirety of a leg of the user 101 by providing an assistance force to the body of the user 101, thereby assisting the user 101 in walking. The wearable device 120 may enable the user 101 to walk independently or to walk for a long time by providing a force required for the user 101 to walk, thereby extending the walking ability of the user 101. The wearable device 120 may help in improving an abnormal walking habit or walking posture of a walker.

When the wearable device 120 performs an exercise function to enhance the exercise effect of the user 101, the wearable device 120 may hinder a body motion of the user 101 or provide resistance to a body motion of the user 101 by providing a resistance force to the body of the user 101. When the wearable device 120 is, for example, a hip-type wearable device, the wearable device 120 may provide an exercise load to a body motion of the user 101 while being worn on the legs, thereby enhancing the exercise effect of the user 101. The user 101 may perform a walking motion while wearing the wearable device 120 for exercise. In this case, the wearable device 120 may apply a resistance force to the leg motion during the walking motion of the user 101.

In various embodiments, an example of a hip-type wearable device 120 that is worn on the waist and legs is described for ease of description. However, as described above, the wearable device 120 may be worn on another body part (e.g., the upper arms, lower arms, hands, calves, and feet) other than the waist and legs (particularly, the thighs), and the shape and configuration of the wearable device 120 may vary depending on the body part on which the wearable device 120 is worn.

FIG. 1B is a diagram illustrating an example of a system including a wearable device according to an embodiment.

Referring to FIG. 1B, an electronic device 110 may communicate with the wearable device 120 and remotely control the wearable device 120. The electronic device 110 may be various types of devices. The electronic device 110 may include, for example, a portable communication device (e.g., a smart phone), a computer device, a portable multimedia device, or a home appliance, but is not limited thereto.

According to an embodiment, the electronic device 110 and/or the wearable device 120 may be connected to another wearable device 130. For example, the wearable device 120, the electronic device 110, and the other wearable device 130 may be connected to each other through a wireless communication link (e.g., a Bluetooth communication link). The other wearable device 130 may include, for example, wireless earphones 131, a smart watch 132, or smart glasses 133, but is not limited thereto. The smart watch 132 may be a watch-type wearable device (or a watch-type electronic device), and the smart glasses 133 may be an eyewear-type wearable device (or an eyewear-type electronic device).

In an embodiment, the smart watch 132 may control the wearable device 120. When the smart watch 132 is connected to the electronic device 110 through a wireless communication link, and the electronic device 110 is connected to the wearable device 120 through a wireless communication link, the smart watch 132 may control the wearable device 120 through the electronic device 110. Embodiments are not limited thereto, and the smart watch 132 may be directly connected to the wearable device 120 and control the wearable device 120.

In an embodiment, the electronic device 110 may transmit, to the other wearable device 130, a control signal to instruct to provide a user with feedback corresponding to a state of the wearable device 120. The other wearable device 130 may provide (or output) feedback (e.g., at least one of visual feedback, auditory feedback, or haptic feedback) corresponding to the state of the wearable device 120 in response to the reception of the control signal.

In an embodiment, the electronic device 110 may communicate with a server 140 using short-range wireless communication (e.g., Wi-Fi) or mobile communication (e.g., 4G, 5G, etc.).

In an embodiment, the electronic device 110 may receive profile information of the user 101 from the user 101. The profile information may include, for example, at least one of the age, gender, height, weight, or body mass index (BMI), or a combination thereof. The electronic device 110 may transmit the profile information of the user 101 to the server 140.

In an embodiment, the electronic device 110 and/or the wearable device 120 may request the user to perform one or more target motions to determine (or check) the exercise ability of the user. The one or more target motions may include, for example, a knee lift, a backward leg stretch, etc. The knee lift may be a motion that starts from a position of the user 101 standing straight with two feet on the ground and returns to the standing position after lifting a knee as much as possible without bending at the waist. The backward leg stretch may be a motion that starts from a position of the user 101 standing straight with the hands on the wall and returns to the standing position after lifting a leg backward as much as possible without bending at the waist.

In an embodiment, the wearable device 120 may obtain motion information of the user performing a target motion using a sensor (e.g., an inertial measurement unit (IMU)), and transmit the obtained motion information to the electronic device 110. The electronic device 110 may transmit the obtained motion information to the server 140.

In an embodiment, the server 140 may determine a target amount of exercise of the user 101 for each of the exercise types (e.g., strength training, balance exercise, and aerobic exercise) through the profile information and motion information received from the electronic device 110. The server 140 may transmit the target amount of exercise for each exercise type to the electronic device 110.

In an embodiment, the server 140 may include a database in which information about a plurality of exercise programs to be provided to the user through the wearable device 120 is stored. For example, the server 140 may manage a user account of the user of the electronic device 110 or the wearable device 120. The server 140 may store and manage a workout program performed by the user and a result of performance with respect to the workout program in link with the user account.

In an embodiment, the electronic device 110 and/or the server 140 may provide the user with various exercise programs to achieve an exercise goal in various exercise environments desired by the user. The exercise goal may include, for example, at least one of muscle strength improvement, physical strength improvement, cardiovascular endurance improvement, core stability improvement, flexibility improvement, or symmetry improvement, or a combination thereof.

In an embodiment, the electronic device 110 and/or the server 140 may recommend exercise programs to the user to achieve the exercise goal of the user. Each exercise program may include one or more exercise modes. For example, each exercise mode may be about a body motion to achieve a predetermined exercise goal. For example, running may be an exercise mode for improving the cardiovascular endurance of the user. For example, a lunge may be an exercise mode for improving the core stability of the user. A combination of a plurality of exercise modes forming each exercise program may vary according to the exercise goal of the user. The electronic device 110 may provide the user with various exercise programs according to the combination of the plurality of exercise modes, even for the same exercise goal.

In an embodiment, the plurality of exercise modes may be stored in the electronic device 110 or the server 140 as a database. The electronic device 110 or the server 140 may generate the plurality of exercise programs based on a variety of information about the user and recommend a target exercise program among the plurality of exercise programs to the user in consideration of the exercise goal or an exercise performance state of the user. For example, the electronic device 110 or the server 140 may determine the target exercise program to recommend to the user based on at least one of the exercise goal, an exercise history, or an exercise performance result of the user. Accordingly, a new exercise program may be recommended to the user even if the user performs an exercise every day under the same exercise goal, and the user may feel like performing a different exercise from the previous exercise by performing the new exercise program.

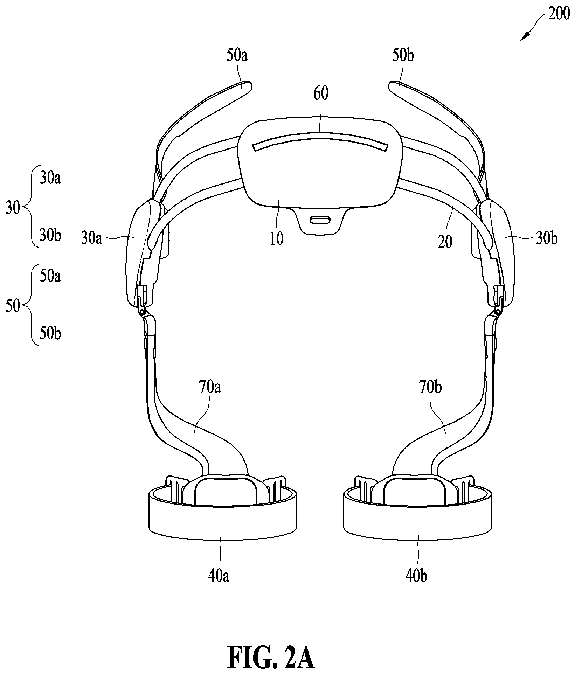

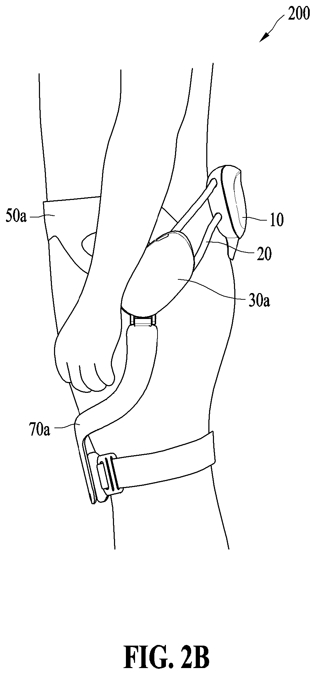

FIG. 2A is a rear schematic view of a wearable device according to an embodiment. FIG. 2B is a left side view of the wearable device according to an embodiment.

A wearable device 200 shown in FIGS. 2A and 2B may be an example of the wearable device 120.

Referring to FIG. 2A, according to an embodiment, the wearable device 200 may include a base body 10, a base frame 20, a driving module 30, thigh fastening portions 40a and 40b, a main belt 50, and leg driving frames 70a and 70b.

According to an embodiment, the base body 10 may be positioned on the lumbar region (an area of the lower back) of the user while the user is wearing the wearable device 200. The base body 10 may be mounted on the lumbar region of the user to provide a cushioning feeling to the lower back of the user and may support the lower back of the user. The base body 10 may be hung on the hip region (an area of the hips) of the user to prevent and/or reduce chances of the wearable device 200 from being separated downward due to gravity while the user is wearing the wearable device 200. The base body 10 may distribute a portion of the weight of the wearable device 200 to the lower back of the user while the user is wearing the wearable device 200. The base body 10 may be connected, directly or indirectly, to the base frame 20. Base frame connecting elements (not shown) to be connected, directly or indirectly, to the base frame 20 may be provided at both end portions of the base body 10.

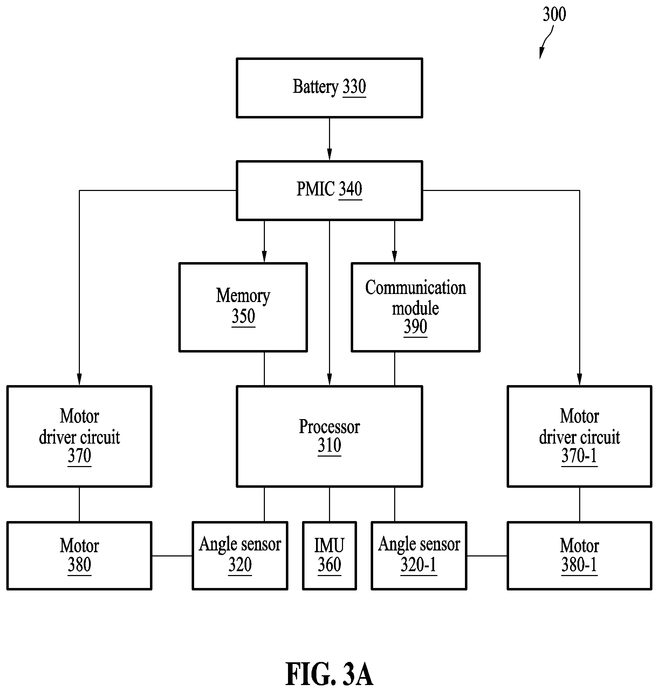

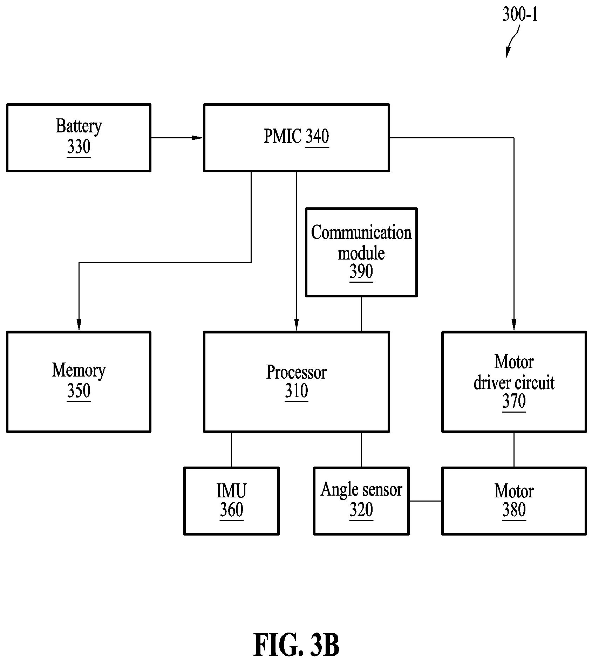

According to an embodiment, the base body 10 may include a lighting unit 60. The lighting unit 60 may include a plurality of light sources (e.g., light-emitting diodes (LEDs)). The lighting unit 60 may emit light by control of a processor (e.g., a processor 310 of FIGS. 3A and 3B). According to embodiments, the processor may control the lighting unit 60 such that visual feedback corresponding to the state of the wearable device 200 (e.g., a booting state, a sensing state, etc.) may be provided (or output) to the user through the lighting unit 60.

According to an embodiment, the base frame 20 may extend from both end portions of the base body 10. The lumbar region of the user may be accommodated inside the base frame 20. The base frame 20 may include at least one rigid body beam. Each beam may be in a curved shape having a preset curvature to enclose the lumbar region of the user. The main belt 50 may be connected, directly or indirectly, to an end portion of the base frame 20. The driving module 30 may be mounted on the base frame 20. The base frame 20 may include a connector (not shown) for mounting the driving module 30 thereon.

According to an embodiment, the driving module 30 may include a first driving module 30a positioned on the left side of the user while the user is wearing the wearable device 200, and a second driving module 30b positioned on the right side of the user while the user is wearing the wearable device 200.

According to an embodiment, the first driving module 30a may include a first angle sensor (e.g., a first encoder or a first Hall sensor) for measuring the left hip joint angle of the user. The second driving module 30b may include a second angle sensor (e.g., a second encoder or a second Hall sensor) for measuring the right hip joint angle of the user.

According to an embodiment, the first driving module 30a may include a first actuator and a first reducer, and the second driving module 30b may include a second actuator and a second reducer. An output end of the first actuator may be connected, directly or indirectly, to an input end of the first reducer, and an output end of the second actuator may be connected, directly or indirectly, to an input end of the second reducer.

According to an embodiment, the processor (e.g., the processor 310 described later) may determine a torque value (e.g., a torque value *τₗ*(*t*) to be described later) and control the first actuator to generate a torque based on the determined torque value (e.g., *τₗ*(*t*))*.* With this control, the first actuator may generate the torque, and the generated torque may be reduced by the first reducer. The torque reduced by the first reducer may rotate the first leg driving frame 70a. The torque reduced by the first reducer may be provided, for example, to the left leg of the user through the first leg driving frame 70a. The processor (e.g., the processor 310 described later) may determine a torque value (e.g., a torque value *τᵣ*(*t*) to be described later) and control the second actuator to generate a torque based on the determined torque value (e.g., *τᵣ*(*t*))*.* With this control, the second actuator may generate the torque, and the generated torque may be reduced by the second reducer. The torque reduced by the second reducer may rotate the second leg driving frame 70b. The torque reduced by the second reducer may be provided, for example, to the right leg of the user through the second leg driving frame 70b.

Each "processor" herein includes processing circuitry, and/or may include multiple processors. For example, as used herein, including the claims, the term "processor" may include various processing circuitry, including at least one processor, wherein one or more of at least one processor, individually and/or collectively in a distributed manner, may be configured to perform various functions described herein. As used herein, when "a processor", "at least one processor", and "one or more processors" are described as being configured to perform numerous functions, these terms cover situations, for example and without limitation, in which one processor performs some of recited functions and another processor(s) performs other of recited functions, and also situations in which a single processor may perform all recited functions. Additionally, the at least one processor may include a combination of processors performing various of the recited /disclosed functions, e.g., in a distributed manner. At least one processor may execute program instructions to achieve or perform various functions.

In an embodiment, the leg driving frames 70a and 70b may support the legs (e.g., thighs) of the user when the wearable device 200 is worn on the legs of the user. The leg driving frames 70a and 70b may include the first leg driving frame 70a configured to support the left leg of the user and the second leg driving frame 70b configured to support the right leg of the user.

According to an embodiment, the leg driving frames 70a and 70b may, for example, transmit the torques generated by the driving modules 30a and 30b (e.g., the torques reduced by the reducers) to the thighs of the user. As one end portions of the leg driving frames 70a and 70b are connected, directly or indirectly, to the driving modules 30a and 30b to rotate, and the other end portions of the leg driving frames 70a and 70b are connected, directly or indirectly, to the thigh fastening portions 40a and 40b, the leg driving frames 70a and 70b may transmit the torques generated by the driving modules 30a and 30b to the thighs of the user while supporting the thighs of the user. For example, the leg driving frames 70a and 70b may push or pull the thighs of the user. The leg driving frames 70a and 70b may extend in the longitudinal direction of the thighs of the user. The leg driving frames 70a and 70b may be bent to surround at least a portion of the circumferences of the thighs of the user.

According to an embodiment, the thigh fastening portions 40a and 40b may be connected, directly or indirectly, to the leg driving frames 70a and 70b and may fasten the leg driving frames 70a and 70b to the thighs. The thigh fastening portions 40a and 40b may include a first thigh fastening portion 40a configured to fasten the first leg driving frame 70a to the left thigh of the user and a second thigh fastening portion 40b configured to fasten the second leg driving frame 70b to the right thigh of the user.

According to an embodiment, the first thigh fastening portion 40a may include a first cover, a first fastening frame, and a first strap, and the second thigh fastening portion 40b may include a second cover, a second fastening frame, and a second strap. The first cover and the second cover may be arranged on one sides of the thighs of the user. The first cover and the second cover may be arranged on the front surfaces of the thighs of the user. The first cover and the second cover may be arranged in the circumferential directions of the thighs of the user. The first cover and the second cover may extend to both sides from the other end portions of the leg driving frames 70a and 70b and may include curved surfaces corresponding to the thighs of the user. One ends of the first cover and the second cover may be connected, directly or indirectly, to the fastening frames, and the other ends thereof may be connected, directly or indirectly, to the straps.

According to an embodiment, the first fastening frame and the second fastening frame may be arranged, for example, to surround at least some portions of the circumferences of the thighs of the user, thereby preventing and/or reducing chances of the thighs of the user from being separated from the leg driving frames 70a and 70b. The first fastening frame may have a fastening structure that connects the first cover and the first strap, and the second fastening frame may have a fastening structure that connects the second cover and the second strap.

According to an embodiment, the first strap may enclose the remaining portion of the circumference of the right thigh of the user that is not covered by the first cover and the first fastening frame, and the second strap may enclose the remaining portion of the circumference of the left thigh of the user that is not covered by the second cover and the second fastening frame. The first strap and the second strap may include, for example, an elastic material (e.g., a band).

According to an embodiment, the main belt 50 may be connected, directly or indirectly, to the base frame 20. The main belt 50 may include a first main belt 50a configured to enclose the left abdomen of the user while the user is wearing the wearable device 200, and a second main belt 50b configured to enclose the right abdomen of the user while the user is wearing the wearable device 200. The first main belt 50a may be formed in a shape having a longer length than the second main belt 50b, but is not limited thereto, and the first main belt 50a may be formed in a shape having the same length as or a shorter length than the second main belt 50b. The first main belt 50a and the second main belt 50b may be connected, directly or indirectly, to both end portions of the base frame 20, respectively. The main belt 50 may be bent in a direction to surround the abdomen of the user when the body of the user is inserted in such a direction that it is accommodated in the wearable device 200. The first main belt 50a and the second main belt 50b may be connected, directly or indirectly, to each other while the user is wearing the wearable device 200. The main belt 50 may distribute a portion of the weight of the wearable device 200 to the abdomen of the user while the user is wearing the wearable device 200.

Referring to FIG. 2B, the base body 10 may be mounted on the back of the lumbar region of the user and be hung on the hip region of the user, thereby supporting a portion of the weight of the wearable device 200. The first driving module 30a may be arranged on the left lumbar region of the user. The base frame 20 may extend from the end portion of the base body 10 and be inclined in a direction toward the first driving module 30a. The first main belt 50a mounted on the base frame 20 may surround the left abdomen of the user.

FIGS. 3A and 3B are block diagrams illustrating examples of a configuration of a wearable device according to an embodiment.

According to an embodiment, a wearable device 300 of FIG. 3A may include the processor 310, angle sensors 320 and 320-1, a battery 330, a power management integrated circuit (PMIC) 340, a memory 350, an IMU 360, motor driver circuits 370 and 370-1, motors 380 and 380-1 (e.g., the first and second actuators described with reference to FIG. 2A), and a communication module 390 comprising communication circuitry. Each angle sensor may or may not be part of a driving module.

Although the plurality of angle sensors 320 and 320-1, the plurality of motor driver circuits 370 and 370-1, and the plurality of motors 380 and 380-1 are shown in FIG. 3A, which is merely an example, the wearable device 300-1 in the example shown in FIG. 3B may include a single angle sensor 320, a single motor driver circuit 370, and a single motor 380. Also, according to implementation, the wearable devices 300 and 300-1 may include a plurality of processors. The number of motor driver circuits, the number of motors, or the number of processors may vary depending on a body part on which the wearable devices 300 and 300-1 are worn.

The wearable device 300 in FIG. 3A and the wearable device 300-1 of FIG. 3B may be examples of the wearable device 120 and the wearable device 200 (e.g., see wearable device 200 in Figs. 2A-2B).

According to an embodiment, at least one of the angle sensor 320, the motor driver circuit 370, and the motor 380 may be included in the first driving module 30a of FIG. 2A, and at least one of the angle sensor 320-1, the motor driver circuit 370-1, and the motor 380-1 may be included in the second driving module 30b of FIG. 2A.

According to an embodiment, the angle sensor 320 and the angle sensor 320-1 may each correspond to a Hall sensor, but are not limited thereto.

According to an embodiment, the angle sensor 320 may measure or sense at least one of the angle, angular velocity, or angular acceleration of a first joint (e.g., the left hip joint, etc.) of the user. The angle sensor 320 may transmit the measurement result (e.g., at least one of the angle value, angular velocity value, or angular acceleration value of the first joint) to the processor 310. For example, the angle sensor 320 may obtain the angular acceleration value by measuring the angular acceleration of the left hip joint angle of the user, and transmit the obtained angular acceleration value to the processor 310. Embodiments are not limited thereto, and the angle sensor 320 may obtain the angle value or angular velocity value by measuring the angle or angular velocity of the left hip joint angle of the user, and transmit the obtained angle value or angle velocity value to the processor 310. The processor 310 may calculate the angular acceleration value of the left hip joint angle through the angle value or angular velocity value received from the angle sensor 320.

According to an embodiment, the angle sensor 320-1 may measure or sense at least one of the angle, angular velocity, or angular acceleration of a second joint (e.g., the right hip joint) of the user. The angle sensor 320-1 may transmit the measurement result (e.g., at least one of the angle value, angular velocity value, or angular acceleration value of the second joint) to the processor 310. For example, the angle sensor 320-1 may obtain the angular acceleration value by measuring the angular acceleration of the right hip joint angle of the user, and transmit the obtained angular acceleration value to the processor 310. Embodiments are not limited thereto, and the angle sensor 320-1 may obtain the angle value or angular velocity value by measuring the angle or angular velocity of the right hip joint angle of the user, and transmit the obtained angle value or angle velocity value to the processor 310. The processor 310 may calculate the angular acceleration value of the right hip joint angle through the angle value or angular velocity value received from the angle sensor 320-1.

According to an embodiment, the angle sensor 320 and the angle sensor 320-1 may additionally measure the knee angles and ankle angles of the user according to the positions of the angle sensor 320 and the angle sensor 320-1.

According to an embodiment, the wearable devices 300 and 300-1 may include a potentiometer. The potentiometer may sense an R-axis joint angle, an L-axis joint angle, an R-axis joint angular velocity, and an L-axis joint angular velocity according to a walking motion of the user. In this example, the R and L axes may be reference axes for the right leg and the left leg of the user, respectively. For example, the R/L axis may be set to be vertical to the ground and set such that a front side of a body of a person has a negative value and a rear side of the body has a positive value.

According to an embodiment, the PMIC 340 may charge the battery 330 using power supplied from an external power source. For example, the external power source and the wearable devices 300 and 300-1 may be connected, directly or indirectly, through a cable (e.g., a universal serial bus (USB) cable, etc.). The PMIC 340 may receive power from the external power source through the cable, and charge the battery 330 using the received power. According to an embodiment, the PMIC 340 may charge the battery 330 through a wireless charging method.

According to an embodiment, the PMIC 340 may transmit the power stored in the battery 330 to the components (e.g., the processor 310, the angle sensors 320 and 320-1, the memory 350, the IMU 360, the motors 380 and 380-1, etc.) in the wearable devices 300 and 300-1. The PMIC 340 may, for example, adjust the power stored in the battery 330 to a voltage or current level suitable for the components in the wearable device 300. The PMIC 340 may include, for example, a converter (e.g., a direct current (DC)-DC converter) or a regulator (e.g., a low-dropout (LDO) regulator or a switching regulator) configured to perform the adjustment described above.

According to an embodiment, the PMIC 340 may determine state information (e.g., a state of charge, a state of health, an overvoltage, a low voltage, an overcurrent, an overcharge, an overdischarge, an overheating, a short circuit, or a swelling) of the battery 330, and transmit the state information of the battery 330 to the processor 310. The processor 310 may control to provide the state information of the battery 330 to the user. For example, the processor 310 may output the state information of the battery 330 through at least one of a sound output module, a vibration output module, or a display module described below. For example, the processor 310 may transmit the state information of the battery 330 to the electronic device 110 through the communication module 390 which comprises communication circuitry, and the electronic device 110 may display the state information of the battery 330 on the display.

According to an embodiment, the IMU 360 may obtain or measure acceleration information (or posture information) of the user. For example, the IMU 360 may measure or obtain 3-axis (e.g., X-axis, Y-axis, and Z-axis) accelerations and rotation angles (e.g., roll, pitch, and yaw) according to a walking motion of the user. The IMU 360 may transmit the obtained acceleration information (e.g., the measured 3-axis accelerations and rotation angles) to the processor 310.

According to an embodiment, the processor 310 may control the overall operation of the wearable devices 300 and 300-1.

According to an embodiment, the processor 310 may, for example, control the components (e.g., the motor driver circuits 370 and 370-1, etc.) in the wearable devices 300 and 300-1 by executing software (e.g., a program or instructions) stored in the memory 350, and perform various data processing or computation. As at least a portion of the data processing or computation, the processor 310 may store data received from other components (e.g., the IMU 360, the angle sensors 320 and 320-1, etc.) in the memory 350, and process the instructions or data stored in the memory 350.

According to an embodiment, the processor 310 may determine torque values for generating torques of the motors 380 and 380-1, and control the motor driver circuits 370 and 370-1 based on the determined torque values. For example, the processor 310 may determine a state factor *y*(*t*) indicating a state of a motion of the user according to an equation *y*(*t*) = sin(*q*_*r*(*t*)) - sin(*q*_*l*(*t*)). *q*_*l*(*t*) may denote the angle value of the first joint (e.g., the left hip joint), and *q*_*r*(*t*) may denote the angle value of the second joint (e.g., the right hip joint). The processor 310 may determine a torque value *τ*(*t*) = *κy*(*t* - △*t*) according to an equation *τ*(*t*). A gain *k* may be a parameter indicating the magnitude and direction of a torque generated by each of the motors 380 and 380-1. As the value of the gain *κ* increases, a greater torque may be output. If the gain *κ* is negative, a torque (or a resistance torque) acting as a resistance force may be output to the user, and if the gain *κ* is positive, a torque (or an assistance torque) acting as an assistance force may be output to the user. A delay *Δt* may be a parameter associated with a torque output timing. The value of the gain *κ* and the value of the delay *Δt* may be preset, and may be adjustable by the user, the wearable device 300, or the electronic device 110 paired with the wearable device 300. The processor 310 may determine a torque value *τᵣ*(*t*) for generating a torque from the motor 380-1 according to an equation *τᵣ*(*t*) = *τ*(*t*), and determine a torque *τₗ*(*t*) for generating a torque from the motor 380 according to *τₗ*(*t*) = *-τ*(*t*).

"Based on" as used herein covers based at least on.

According to an embodiment, the motor driver circuits 370 and 370-1 may control the motors 380 and 380-1 based on the torque values received from the processor 310, and the motors 380 and 380-1 may generate torques by this control.

According to an embodiment, the communication module 390 may support the establishment of a direct (or wired) communication channel or a wireless communication channel between the wearable device 300, 300-1 and an external electronic device, and support the communication through the established communication channel. The communication module 390 may include one or more communication processors configured to support direct (or wired) communication or wireless communication. According to an embodiment, the communication module 390 may include a wireless communication module (e.g., a cellular communication module, a short-range wireless communication module, or a global navigation satellite system (GNSS) communication module) or a wired communication module (e.g., a local area network (LAN) communication module or a power line communication (PLC) module). A corresponding one of these communication modules may communicate with the external electronic device via a first network (e.g., a short-range communication network such as Bluetooth^{™}, wireless-fidelity (Wi-Fi) direct, or infrared data association (IrDA)) or a second network (e.g., a legacy cellular network, a 5G network, a next-generation communication network, the Internet, or a computer network). These various types of communication modules may be implemented as a single component (e.g., a single chip), or may be implemented as multiple components (e.g., multiple chips) separate from each other.

According to an embodiment, the wearable devices 300 and 300-1 may include a display module. The display module may include, for example, a display and/or a lighting unit (e.g., the lighting unit 60 of FIG. 2A). The processor 310 may control the display module so that the display module may provide visual feedback to the user.

According to an embodiment, the wearable devices 300 and 300-1 may include a sound output module. The sound output module may include, for example, a speaker. The processor 310 may control the sound output module so that the sound output module may provide auditory feedback to the user.

According to an embodiment, the wearable devices 300 and 300-1 may include a vibration output module. The vibration output module may include, for example, a vibration motor. The processor 310 may control the vibration output module so that the vibration output module may provide tactile feedback (or haptic feedback) to the user.

According to an embodiment, at least one of the processor 310, the battery 330, the PMIC 340, the memory 350, the IMU 360, the communication module 390, the display module, the sound output module, or the vibration output module, or a combination thereof may be positioned in the base body 10 of FIGS. 2A and 2B.

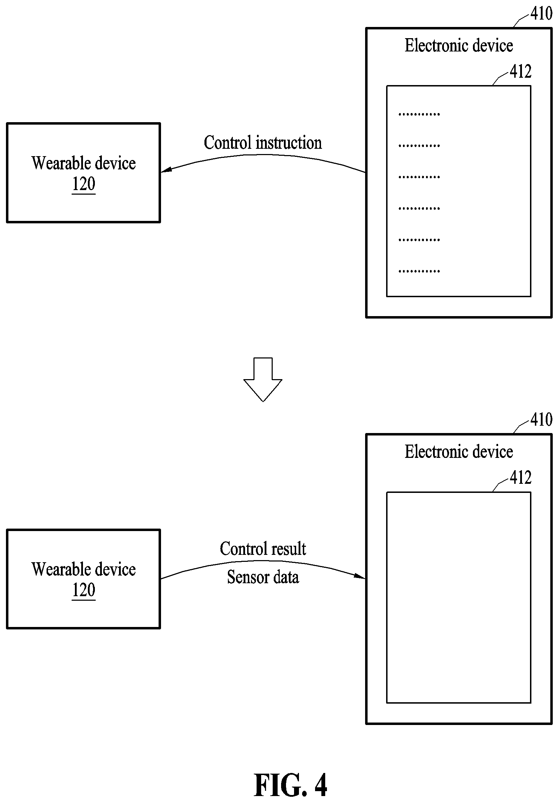

FIG. 4 is a diagram illustrating an interaction between a wearable device and an electronic device according to an embodiment.

Referring to FIG. 4, the wearable device 120 may communicate with an electronic device 410 (e.g., the electronic device 110) (e.g., a smart phone or smart watch). For example, the electronic device 410 may be a user terminal of the user who uses the wearable device 120 or a controller device dedicated to the wearable device 120. According to an embodiment, the wearable device 120 and the electronic device 410 may be connected, directly or indirectly, to each other through short-range wireless communication (e.g., Bluetooth^{™} or Wi-Fi communication).

According to an embodiment, the electronic device 410 may verify a state of the wearable device 120 or execute an application to control or operate the wearable device 120. A screen of a user interface (UI) may be displayed to control an operation of the wearable device 120 or determine an operation mode of the wearable device 120 on a display 412 of the electronic device 410 through the execution of the application. The UI may be, for example, a graphical user interface (GUI).

According to an embodiment, the user may input an instruction to control an operation of the wearable device 120 through the GUI screen on the display 412 of the electronic device 410 (e.g., an instruction to instruct the wearable device 120 to operate in an assistance mode of generating an assistance force or an instruction to instruct the wearable device 120 to operate in a resistance mode of generating a resistance force) or change settings of the wearable device 120. The electronic device 410 may generate a control instruction (or control signal) corresponding to an operation control instruction or a setting change instruction input by the user and transmit the generated control instruction to the wearable device 120. The wearable device 120 may operate according to the received control instruction and transmit a control result according to the control instruction and/or sensor data measured by the sensor (e.g., the angle sensors 320 and 320-1 and/or the IMU 360) of the wearable device 120 to the electronic device 410. The electronic device 410 may provide the user with result information (e.g., walking ability information, exercise ability information, or exercise posture evaluation information) derived by analyzing the control result and/or the sensor data through the GUI screen.

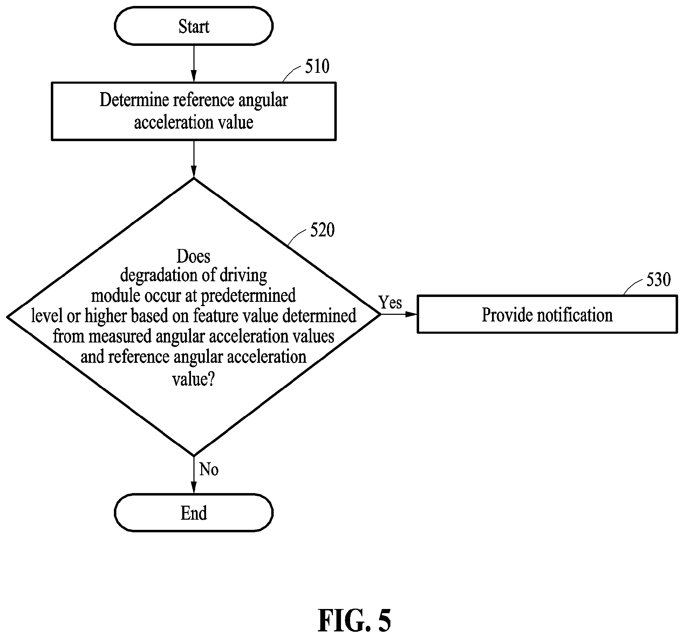

FIGS. 5 to 7 are diagrams illustrating an example of an operation of a wearable device according to an embodiment.

Referring to FIG. 5, in operation 510, the wearable device 120 may determine a reference angular acceleration value (or an initial angular acceleration value). According to an embodiment, the processor 310 of the wearable device 120 may receive at least one angular acceleration value of a joint (e.g., a hip j oint) of a user from an angle sensor (e.g., the angle sensor 320 and/or the angle sensor 320-1) for an initial time interval for which the user uses the wearable device 120. The processor 310 may determine the reference angular acceleration value based on the received at least one angular acceleration value.

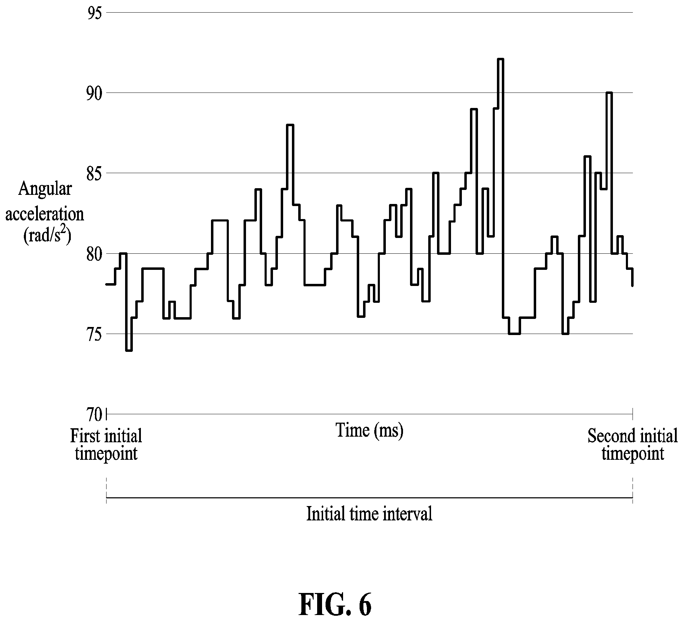

For example, in the example shown in FIG. 6, the processor 310 may receive angular acceleration values of the hip joint of the user from the angle sensor for the initial time interval, and determine a maximum value, minimum value, or average value from the received angular acceleration values. The initial time interval may be a time interval from a first initial timepoint to a second initial timepoint. The first initial timepoint may be, for example, a timepoint when the user wears the wearable device 120 and starts an exercise, and the second initial timepoint may be a timepoint when a predetermined time (e.g., "2" minutes) elapses from the first initial timepoint. The predetermined time is not limited to the above example, "2" minutes.

The processor 310 may determine the reference angular acceleration value (or the initial angular acceleration value) through the determined maximum value, minimum value, or average value. For example, when the maximum value of the angular acceleration values received from the angle sensor for the initial time interval is 92 radians per square second (rad/s²), the processor 310 may determine the maximum value (e.g., 92 rad/s²) to be the reference angular acceleration value (or the initial angular acceleration value) (hereinafter, referred to as the "first reference angular acceleration value"). As another example, when the minimum value of the angular acceleration values received from the angle sensor for the initial time interval is 74 rad/s², the processor 310 may determine the minimum value (e.g., 74 rad/s²) to be the reference angular acceleration value (or the initial angular acceleration value) (hereinafter, referred to as the "second reference angular acceleration value"). As still another example, when the average value of the angular acceleration values received from the angle sensor for the initial time interval is 80 rad/s², the processor 310 may determine the average value (e.g., 80 rad/s²) to be the reference angular acceleration value (or the initial angular acceleration value) (hereinafter, referred to as the "third reference angular acceleration value").

The wearable device 120 may determine a torque value *τ*(*t*) according to *τ*(*t*) = *κy*(*t -* △*t),* and control the driving module 30 based on the torque value *τ*(*t*) so that the driving module 30 may generate a torque (e.g., an assistance torque or a resistance torque). The driving module 30 may generate a torque and provide the torque to the user, and the user may perform an exercise. While the user performs the exercise, the wearable device 120 may continuously obtain an angular acceleration value (hereinafter, referred to as the "measured angular acceleration value") by measuring (or sensing) the angular acceleration of the joint through the angle sensor (e.g., the angle sensor 320 and/or the angle sensor 320-1). Each "driving module" herein may comprise a motor and/or circuitry.

In operation 520, the wearable device 120 may determine whether a degradation of the driving module 30 occurs at a predetermined level and/or higher based on a feature value determined from the measured angular acceleration values and the reference angular acceleration value. According to an embodiment, the wearable device 120 (e.g., the processor 310) may determine whether the determined feature value increases by a predetermined ratio (e.g., 15%) compared to the reference angular acceleration value (e.g., the first reference angular acceleration value, the second reference angular acceleration value, or the third reference angular acceleration value). In response to the determination that the determined feature value increases by the predetermined ratio (e.g., 15%) or more compared to the reference angular acceleration value, the processor 310 may determine that the degradation of the driving module 30 occurs at the predetermined level or higher. In response to the determination that the determined feature value increases by less than the predetermined ratio (e.g., 15%) compared to the reference angular acceleration value, the processor 310 may determine that the degradation of the driving module 30 does not occur at the predetermined level or higher. The determined feature value may be, for example, the maximum value, minimum value, or average value of the measured angular acceleration values, but is not limited thereto. The degradation of the driving module 30 may include, for example, the wear of a reducer in the driving module 30 and/or the wear of a shaft of the reducer.

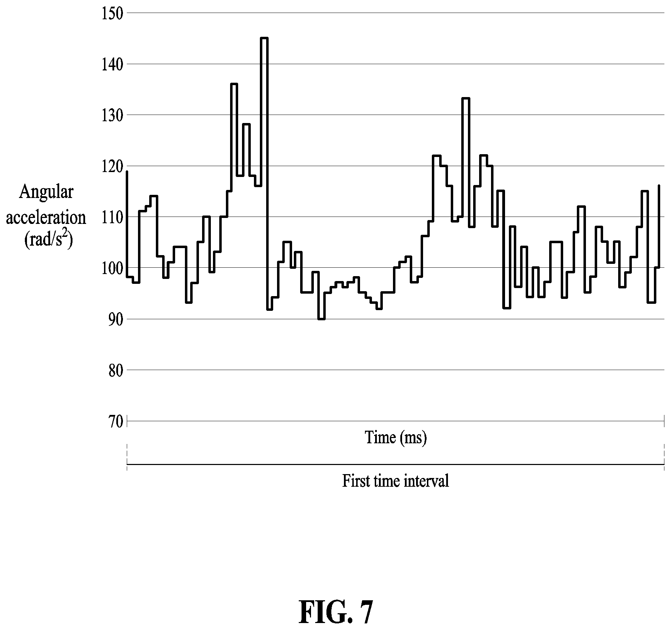

In the example shown in FIG. 7, the processor 310 may receive (or obtain) the measured angular acceleration values of the joint (e.g., the hip j oint) of the user from the angle sensor for the first time interval. The first time interval may correspond to a portion of the time for which the user performs an exercise wearing the wearable device 120 after the initial time interval. The predetermined time interval may be, for example, "2" minutes but is not limited thereto. The processor 310 may determine the feature value (e.g., the maximum value, minimum value, or average value) from the measured angular acceleration values received (or obtained) for the first time interval. The processor 310 may determine whether the feature value (e.g., the maximum value, minimum value, or average value) in the first time interval increases by a predetermined ratio (e.g., 15%) compared to the reference angular acceleration value (e.g., the first reference angular acceleration value, the second reference angular acceleration value, or the third reference angular acceleration value). The predetermined ratio is not limited to the above example, 15%. In response to the determination that the feature value in the first time interval increases by the predetermined ratio (e.g., 15%) or more compared to the reference angular acceleration value, the processor 310 may determine that the degradation of the driving module 30 occurs at the predetermined level or higher. In response to the determination that the feature value in the first time interval increases by less than the predetermined ratio (e.g., 15%) compared to the reference angular acceleration value, the processor 310 may determine that the degradation of the driving module 30 does not occur at the predetermined level or higher.

For example, when the maximum value of the measured angular acceleration values in the first time interval is 110 rad/s², the processor 310 may determine that the maximum value 110 rad/s² of the measured angular acceleration values in the first time interval increases by more than the predetermined ratio (e.g., 15%) compared to the first reference angular acceleration value (e.g., 92 rad/s²). In this case, the processor 310 may determine that the degradation of the driving module 30 occurs at the predetermined level or higher. When the maximum value of the measured angular acceleration values in the first time interval is 100 rad/s², the processor 310 may determine that the maximum value 100 rad/s² of the measured angular acceleration values in the first time interval increases by not more than the predetermined ratio (e.g., 15%) compared to the first reference angular acceleration value (e.g., 92 rad/s²). In this case, the processor 310 may determine that the degradation of the driving module 30 occurs at lower than the predetermined level.

As another example, when the minimum value of the measured angular acceleration values in the first time interval is 90 rad/s², the processor 310 may determine that the minimum value 90 rad/s² of the measured angular acceleration values in the first time interval increases by more than the predetermined ratio (e.g., 15%) compared to the second reference angular acceleration value (e.g., 74 rad/s²). In this case, the processor 310 may determine that the degradation of the driving module 30 occurs at the predetermined level or higher. When the minimum value of the measured angular acceleration values in the first time interval is 83 rad/s², the processor 310 may determine that the minimum value 83 rad/s² of the measured angular acceleration values in the first time interval increases by not more than the predetermined ratio (e.g., 15%) compared to the second reference angular acceleration value (e.g., 74 rad/s²). In this case, the processor 310 may determine that the degradation of the driving module 30 occurs at lower than the predetermined level.

As another example, when the average value of the measured angular acceleration values in the first time interval is 95 rad/s², the processor 310 may determine that the average value 95 rad/s² of the measured angular acceleration values in the first time interval increases by more than the predetermined ratio (e.g., 15%) compared to the third reference angular acceleration value (e.g., 80 rad/s²). In this case, the processor 310 may determine that the degradation of the driving module 30 occurs at the predetermined level or higher. When the average value of the measured angular acceleration values in the first time interval is 90 rad/s², the processor 310 may determine that the average value 90 rad/s² of the measured angular acceleration values in the first time interval increases by not more than the predetermined ratio (e.g., 15%) compared to the third reference angular acceleration value (e.g., 80 rad/s²). In this case, the processor 310 may determine that the degradation of the driving module 30 occurs at lower than the predetermined level.

When the degradation of the driving module 30 occurs at the predetermined level or higher (if YES in operation 520), the wearable device 120 may provide a notification, in operation 530. The notification may correspond to a notification about the degradation of the driving module 30. The notification may include, for example, at least one of a motor replacement notification or a notification indicating that a visit to a service center is needed. The notification may be at least one of a visual notification, an auditory notification, or a tactile notification. According to an embodiment, the wearable device 120 may provide the notification to the user through at least one of the sound output module (e.g., a speaker) of the wearable device 120, the electronic device 110, or the other wearable device 130 (e.g., the wireless earphones 131 or the smart watch 132).

When the wearable device 120 is used for a long time, the degradation of the driving module 30 (e.g., the wear of the reducer and/or the wear of the shaft of the reducer) may occur, and continuing degradation of the driving module 30 may cause the motor 380 or 380-1, for example, to be stuck and stop rotating. A rotation axis may be misaligned due to the degradation of the driving module 30, and thus, the user may feel a load from the misaligned rotation axis when the user moves his/her joint. To overcome this load, the user may apply a force (or a torque) (hereinafter, referred to as the "human torque") to the wearable device 120.

The human torque may generate an output torque (e.g., a torque corresponding to the sum of the torque generated by the driving module 30 and the human torque) (or a high torque) having a magnitude greater than or equal to a predetermined ratio compared to the torque value *τ*(*t*). For example, when the torque value *τ*(*t*) is 10 newton-meters (Nm), the torque value of the output torque may be, for example, 11.5 Nm, which is greater than or equal to the torque value *τ*(*t*) by a predetermined ratio (e.g., 15%). This output torque (or high torque) may damage the components of the wearable device 120. According to an embodiment, the human torque may increase the feature value by the predetermined ratio (e.g., 15%) or more compared to the reference angular acceleration value. In this case, the wearable device 120 may determine that the degradation of the driving module 30 occurs at the predetermined level or higher, and provide a notification about the degradation of the driving module 30 to the user. Accordingly, the ease of maintenance management of the wearable device 120 may improve.

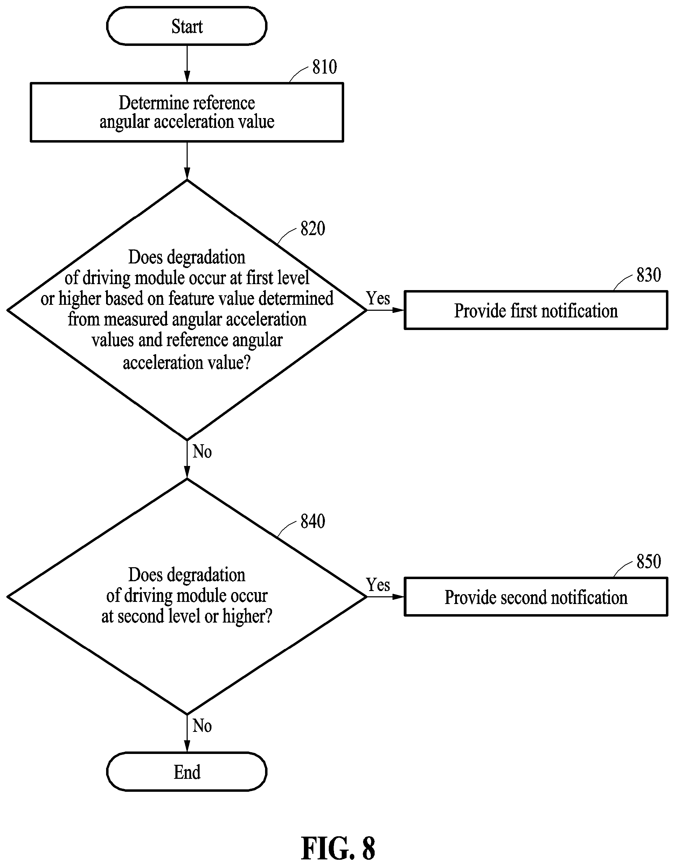

FIG. 8 is a flowchart illustrating another example of an operation of a wearable device according to an embodiment.

Referring to FIG. 8, in operation 810, the wearable device 120 may determine a reference angular acceleration value (or an initial angular acceleration value). According to an embodiment, the processor 310 may determine the reference angular acceleration value (or the initial angular acceleration value) (e.g., a first reference angular acceleration value, a second reference angular acceleration value, or a third reference angular acceleration value) based on at least one of angular acceleration values received from an angle sensor (e.g., the angle sensor 320 and/or the angle sensor 320-1) for an initial time interval (e.g., the initial time interval of FIG. 6). The description of operation 510 may apply to the description of operation 810. The wearable device 120 may obtain measured angular acceleration values by measuring (or sensing) the angular acceleration of a joint through the angle sensor (e.g., the angle sensor 320 and/or the angle sensor 320-1).

In operation 820, the wearable device 120 may determine whether a degradation of the driving module 30 occurs at a first level or higher based on a feature value (e.g., the maximum value, minimum value, or average value) determined from the measured angular acceleration values and the reference angular acceleration value (e.g., the first reference angular acceleration value, the second reference angular acceleration value, or the third reference angular acceleration value). The first level may be, for example, a level of degradation that requires an overall inspection of the wearable device 120 at a service center. According to an embodiment, the processor 310 may determine the feature value (e.g., the maximum value, minimum value, or average value) from the angular acceleration values received from the angle sensor for a first time interval (e.g., the first time interval of FIG. 7). The processor 310 may determine whether an increase rate of the feature value (e.g., the maximum value, minimum value, or average value) in the first time interval compared to the reference angular acceleration value (e.g., the first reference angular acceleration value, second reference angular acceleration value, or third reference angular acceleration value) is greater than or equal to a first ratio (e.g., 15%). The first ratio is not limited to the above example, 15%. The processor 310 may determine that the degradation of the driving module 30 occurs at the first level or higher when the increase rate of the feature value in the first time interval compared to the reference angular acceleration value is greater than or equal to the first ratio (e.g., 15%).

For example, when the maximum value of the measured angular acceleration values in the first time interval is 110 rad/s², the processor 310 may determine that the increase rate (e.g., about 20%) of the maximum value 110 rad/s² in the first time interval compared to the first reference angular acceleration value (e.g., 92 rad/s²) exceeds the first ratio (e.g., 15%). In this case, the processor 310 may determine that the degradation of the driving module 30 occurs at the first level or higher.

As another example, when the minimum value of the measured angular acceleration values in the first time interval is 90 rad/s², the processor 310 may determine that the increase rate (e.g., about 22%) of the minimum value 90 rad/s² in the first time interval compared to the second reference angular acceleration value (e.g., 74 rad/s²) exceeds the first ratio (e.g., 15%). In this case, the processor 310 may determine that the degradation of the driving module 30 occurs at the first level or higher.

As another example, when the average value of the measured angular acceleration values in the first time interval is 95 rad/s², the processor 310 may determine that the increase rate (e.g., about 19%) of the average value 95 rad/s² in the first time interval compared to the third reference angular acceleration value (e.g., 80 rad/s²) exceeds the first ratio (e.g., 15%). In this case, the processor 310 may determine that the degradation of the driving module 30 occurs at the first level or higher.

In response to the determination that the degradation of the driving module 30 occurs at the first level or higher, the wearable device 120 may provide a first notification, in operation 830. The first notification may include, for example, a notification indicating that the wearable device 120 needs to be inspected at a service center. According to an embodiment, the wearable device 120 may provide the first notification to the user through at least one of the sound output module (e.g., a speaker) of the wearable device 120, the electronic device 110, or the other wearable device 130 (e.g., the wireless earphones 131 or the smart watch 132).

According to an embodiment, in response to the determination that the degradation of the driving module 30 occurs at the first level or higher, the wearable device 120 may reduce the magnitude of the torque value *τ*(*t*) so as to reduce the magnitude of the output torque (e.g., the torque corresponding to the sum of the torque generated by the driving module 30 and the human torque). For example, the processor 310 may reduce the gain *κ* in an equation *τ*(*t*) = *κy*(*t* - △*t*). Accordingly, the magnitude of the output torque may be reduced.

In response to the determination that the degradation of the driving module 30 occurs at lower than the first level, the wearable device 120 may determine whether the degradation of the driving module 30 occurs at a second level or higher, in operation 840. The second level may be a lower level of degradation than the first level and may be, for example, a level of degradation that requires an inspection (or repair) of the driving module 30. According to an embodiment, the processor 310 may determine whether an increase rate of the feature value (e.g., the maximum value, minimum value, or average value) in the first time interval compared to the reference angular acceleration value (e.g., the first reference angular acceleration value, second reference angular acceleration value, or third reference angular acceleration value) is greater than or equal to a second ratio (e.g., 7%). The second ratio is not limited to the above example, 7%. The processor 310 may determine that the degradation of the driving module 30 occurs at the second level or higher when the increase rate of the feature value in the first time interval compared to the reference angular acceleration value is greater than or equal to the second ratio.

For example, when the maximum value of the measured angular acceleration values in the first time interval is 100 rad/s², the processor 310 may determine that the increase rate (e.g., about 8.7%) of the maximum value 100 rad/s² of the measured angular acceleration values in the first time interval compared to the first reference angular acceleration value (e.g., 92 rad/s²) does not exceed the first ratio (e.g., 15%). In this case, the processor 310 may determine whether the degradation of the driving module 30 occurs at the second level or higher. The processor 310 may determine that the increase rate (e.g., about 8.7%) of the maximum value 100 rad/s² of the measured angular acceleration values in the first time interval exceeds the second ratio (e.g., 7%). In this case, the processor 310 may determine that the degradation of the driving module 30 occurs at the second level or higher.

As another example, when the minimum value of the measured angular acceleration values in the first time interval is 83 rad/s², the processor 310 may determine that the increase rate (e.g., about 13%) of the minimum value 83 rad/s² of the measured angular acceleration values in the first time interval compared to the second reference angular acceleration value (e.g., 74 rad/s²) does not exceed the first ratio (e.g., 15%). In this case, the processor 310 may determine whether the degradation of the driving module 30 occurs at the second level or higher. The processor 310 may determine that the increase rate (e.g., about 13%) of the minimum value 83 rad/s² of the measured angular acceleration values in the first time interval exceeds the second ratio (e.g., 7%). In this case, the processor 310 may determine that the degradation of the driving module 30 occurs at the second level or higher.

As another example, when the average value of the measured angular acceleration values in the first time interval is 90 rad/s², the processor 310 may determine that the increase rate (e.g., about 13%) of the average value 90 rad/s² of the measured angular acceleration values in the first time interval compared to the third reference angular acceleration value (e.g., 80 rad/s²) does not exceed the first ratio (e.g., 15%). In this case, the processor 310 may determine whether the degradation of the driving module 30 occurs at the second level or higher. The processor 310 may determine that the increase rate (e.g., about 13%) of the average value 90 rad/s² of the measured angular acceleration values in the first time interval exceeds the second ratio (e.g., 7%). In this case, the processor 310 may determine that the degradation of the driving module 30 occurs at the second level or higher.

In response to the determination that the degradation of the driving module 30 occurs at the second level or higher, the wearable device 120 may provide a second notification, in operation 850. The second notification may include, for example, a notification indicating that a motor inspection is needed. According to an embodiment, the wearable device 120 may provide the second notification to the user through at least one of the sound output module (e.g., a speaker) of the wearable device 120, the electronic device 110, or the other wearable device 130 (e.g., the wireless earphones 131 or the smart watch 132).

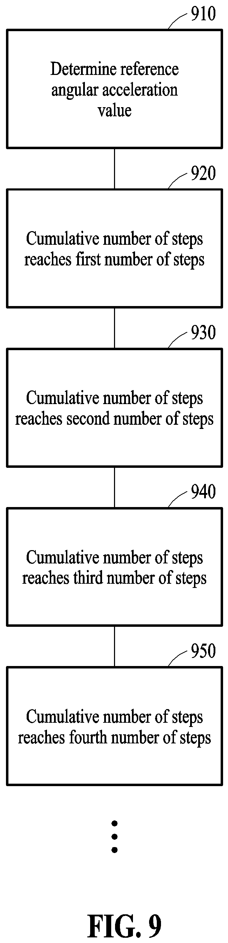

FIG. 9 is a diagram illustrating another example of an operation of a wearable device according to an embodiment.

Referring to FIG. 9, in operation 910, the wearable device 120 may determine a reference angular acceleration value (or an initial angular acceleration value). According to an embodiment, the processor 310 may determine the reference angular acceleration value (or the initial angular acceleration value) (e.g., a first reference angular acceleration value, a second reference angular acceleration value, or a third reference angular acceleration value) based on at least one of angular acceleration values received from the angle sensor 320 for an initial time interval (e.g., the initial time interval of FIG. 6). The description of operation 510 may apply to the description of operation 910.

The wearable device 120 (e.g., the processor 310) may accumulate the number of steps of a user who performs an exercise.

In operation 920, the wearable device 120 may determine that a cumulative number of steps of the user reaches a first number of steps (e.g., 1.8 million steps). The first number of steps is not limited to 1.8 million steps. When the cumulative number of steps of the user reaches the first number of steps (e.g., 1.8 million), the wearable device 120 may determine whether the degradation of the driving module 30 occurs at a predetermined level or higher (e.g., a level of degradation requiring an inspection of the driving module 30 at the first number of steps) based on a feature value (e.g., a maximum value, minimum value, or average value) determined from measured angular acceleration values obtained for a predetermined time interval (e.g., "2" minutes) (hereinafter, referred to as the "second time interval") and a reference angular acceleration value (e.g., a first reference angular acceleration value, second reference angular acceleration value, or third reference angular acceleration value).

For example, when the cumulative number of steps reaches the first number of steps (e.g., 1.8 million), the processor 310 may determine the feature value (e.g., the maximum value, minimum value, or average value) from the measured angular acceleration values in the second time interval. The processor 310 may determine whether an increase rate of the feature value (e.g., the maximum value, minimum value, or average value) in the second time interval compared to the reference angular acceleration value (e.g., the first reference angular acceleration value, second reference angular acceleration value, or third reference angular acceleration value) is greater than or equal to a ratio (e.g., 5%) set (or determined) corresponding to the first number of steps. When the increase rate of the feature value in the second time interval compared to the reference angular acceleration value is less than the ratio (e.g., 5%) that is set corresponding to the first number of steps, the processor 310 may determine that the degradation of the driving module 30 occurs at lower than the predetermined level (or that an inspection of the driving module 30 is not needed). When the increase rate of the feature value in the second time interval compared to the reference angular acceleration value is greater than or equal to the ratio (e.g., 5%) that is set corresponding to the first number of steps, the processor 310 may determine that the degradation of the driving module 30 occurs at the predetermined level or higher (or that an inspection of the driving module 30 is needed) and control to provide the user with a notification indicating that an inspection of the driving module 30 is needed.

In operation 930, the wearable device 120 may determine that the cumulative number of steps of the user reaches a second number of steps (e.g., 3.7 million steps). The second number of steps is not limited to 3.7 million steps. When the cumulative number of steps of the user reaches the second number of steps, the wearable device 120 may determine whether the degradation of the driving module 30 occurs at a predetermined level or higher (e.g., a level of degradation requiring an inspection of the driving module 30 at the second number of steps) based on a feature value (e.g., a maximum value, minimum value, or average value) determined from measured angular acceleration values obtained for a predetermined time interval (e.g., "2" minutes) (hereinafter, referred to as the "third time interval") and a reference angular acceleration value (e.g., a first reference angular acceleration value, second reference angular acceleration value, or third reference angular acceleration value).

For example, the processor 310 may determine a feature value (e.g., a maximum value, minimum value, or average value) from the measured angular acceleration values in the third time interval. The processor 310 may determine whether an increase rate of the feature value (e.g., the maximum value, minimum value, or average value) in the third time interval compared to the reference angular acceleration value (e.g., the first reference angular acceleration value, second reference angular acceleration value, or third reference angular acceleration value) is greater than or equal to a ratio (e.g., 7%) set (or determined) corresponding to the second number of steps. When the increase rate of the feature value in the third time interval compared to the reference angular acceleration value is less than the ratio (e.g., 7%) that is set corresponding to the second number of steps, the processor 310 may determine that the degradation of the driving module 30 occurs at lower than the predetermined level (or that an inspection of the driving module 30 is not needed). When the increase rate of the feature value in the third time interval compared to the reference angular acceleration value is greater than or equal to the ratio (e.g., 7%), the processor 310 may determine that the degradation of the driving module 30 occurs at the predetermined level or higher (or that an inspection of the driving module 30 is needed) and control to provide the user with a notification indicating that an inspection of the driving module 30 is needed.

In operation 940, the wearable device 120 may determine that the cumulative number of steps of the user reaches a third number of steps (e.g., 5.5 million steps). The third number of steps is not limited to 5.5 million steps. When the cumulative number of steps of the user reaches the third number of steps, the wearable device 120 may determine whether the degradation of the driving module 30 occurs at a predetermined level or higher (e.g., a level of degradation requiring an inspection of the driving module 30 at the third number of steps) based on a feature value (e.g., a maximum value, minimum value, or average value) determined from measured angular acceleration values obtained for a predetermined time interval (e.g., "2" minutes) (hereinafter, referred to as the "fourth time interval") and a reference angular acceleration value (e.g., a first reference angular acceleration value, second reference angular acceleration value, or third reference angular acceleration value).

For example, the processor 310 may determine a feature value (e.g., a maximum value, minimum value, or average value) from the measured angular acceleration values in the fourth time interval. The processor 310 may determine whether an increase rate of the feature value (e.g., the maximum value, minimum value, or average value) in the fourth time interval compared to the reference angular acceleration value (e.g., the first reference angular acceleration value, second reference angular acceleration value, or third reference angular acceleration value) is greater than or equal to a ratio (e.g., 10%) that is set corresponding to the third number of steps. When the increase rate of the feature value in the fourth time interval compared to the reference angular acceleration value is less than the ratio (e.g., 10%) that is set corresponding to the third number of steps, the processor 310 may determine that the degradation of the driving module 30 occurs at lower than the predetermined level (or that an inspection of the driving module 30 is not needed). When the increase rate of the feature value in the fourth time interval compared to the reference angular acceleration value is greater than or equal to the ratio (e.g., 10%) that is set corresponding to the third number of steps, the processor 310 may determine that the degradation of the driving module 30 occurs at the predetermined level or higher (or that an inspection of the driving module 30 is needed) and control to provide the user with a notification indicating that an inspection of the driving module 30 is needed.

In operation 950, the wearable device 120 may determine that the cumulative number of steps of the user reaches a fourth number of steps (e.g., 7.4 million steps). The fourth number of steps is not limited to 7.4 million steps. When the cumulative number of steps of the user reaches the fourth number of steps, the wearable device 120 may determine whether the degradation of the driving module 30 occurs at a predetermined level or higher (e.g., a level of degradation requiring an overall inspection of the wearable device 120 at the fourth number of steps) based on a feature value (e.g., a maximum value, minimum value, or average value) determined from measured angular acceleration values obtained for a predetermined time interval (e.g., "2" minutes) (hereinafter, referred to as the "fifth time interval") and a reference angular acceleration value (e.g., a first reference angular acceleration value, second reference angular acceleration value, or third reference angular acceleration value).

For example, when the cumulative number of steps reaches the fourth number of steps, the processor 310 may determine the feature value (e.g., the maximum value, minimum value, or average value) from the measured angular acceleration values in the fifth time interval. The processor 310 may determine whether an increase rate of the feature value (e.g., the maximum value, minimum value, or average value) in the fifth time interval compared to the reference angular acceleration value (e.g., the first reference angular acceleration value, second reference angular acceleration value, or third reference angular acceleration value) is greater than or equal to a ratio (e.g., 15%) that is set corresponding to the fourth number of steps. When the increase rate of the feature value in the fifth time interval compared to the reference angular acceleration value is less than the ratio (e.g., 15%) that is set corresponding to the fourth number of steps, the processor 310 may determine that the degradation of the driving module 30 occurs at lower than the predetermined level (or that an inspection of the driving module 30 is not needed). When the increase rate of the feature value in the fifth time interval compared to the reference angular acceleration value is greater than or equal to the ratio (e.g., 15%) that is set corresponding to the fourth number of steps, the processor 310 may determine that the degradation of the driving module 30 occurs at the predetermined level or higher (or that an inspection of the driving module 30 is needed). When the wearable device 120 is used so long that the cumulative number of steps of the user reaches the fourth number of steps, the processor 310 may control to provide the user with a notification indicating that the wearable device 120 needs to be inspected at a service center.

According to an embodiment, when the cumulative number of steps of the user reaches the fourth number of steps, the processor 310 may reduce the magnitude of the torque value *τ*(*t*) so as to reduce the magnitude of the output torque (e.g., the torque corresponding to the sum of the torque generated by the driving module 30 and the human torque). For example, the processor 310 may reduce the gain *κ* in an equation *τ*(*t*) = *κy*(*t -* △*t*). Accordingly, the magnitude of the output torque may be reduced.

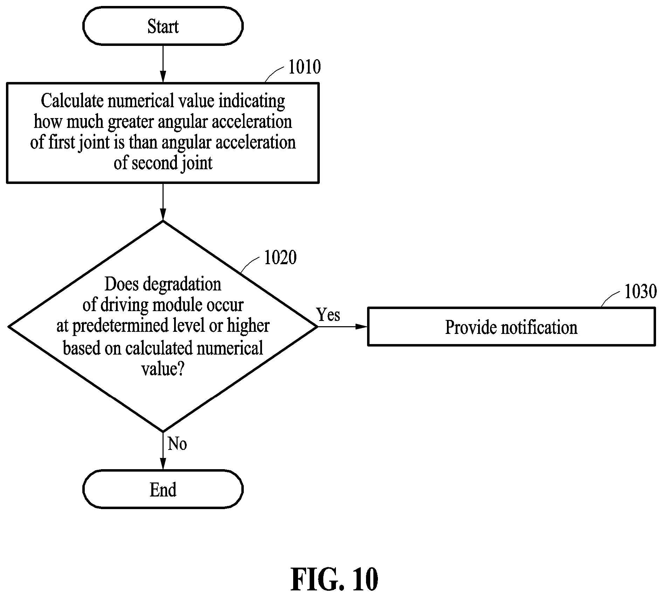

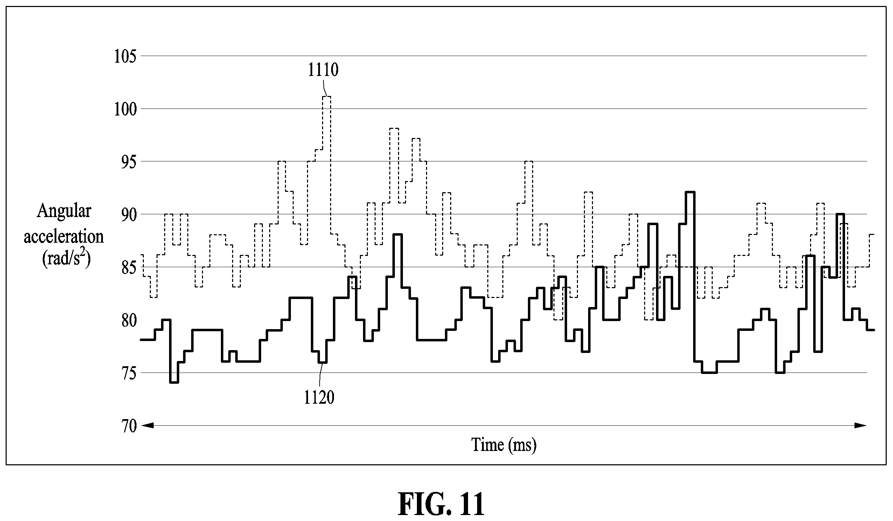

FIGS. 10 and 11 are diagrams illustrating another example of an operation of a wearable device according to an embodiment.

Referring to FIG. 10, in operation 1010, the wearable device 120 may calculate a numerical value indicating how much greater an angular acceleration of a first joint is than an angular acceleration of a second j oint. In the example shown in FIG. 11, the processor 310 may receive, for a predetermined time interval, angular acceleration values 1110 of the first joint (e.g., the left hip joint) from the angle sensor 320 and angular acceleration values 1120 of the second joint (e.g., the right hip joint) from the angle sensor 320-1. The processor 310 may calculate the average value of the angular acceleration values 1110 and calculate the average value of the angular acceleration values 1120. The processor 310 may determine a numerical value indicating how much greater the average value of the angular acceleration values 1110 is than the average value of the angular acceleration values 1120. For example, the average value of the angular acceleration values 1120 may be 80 rad/s², and the average value of the angular acceleration values 1110 may be 90 rad/s². The processor 310 may determine that the average value of the angular acceleration values 1110 is 12.5% greater than the average value of the angular acceleration values 1120. In other words, the processor 310 may calculate the numerical value (e.g., 12.5%) indicating how much greater the average value of the angular acceleration values 1110 is than the average value of the angular acceleration values 1120.

The wearable device 120 may determine a torque value *τ*(*t*) according to *τ*(*t*) = *κy*(*t -* △*t*)*,* and control the driving module 30 based on the torque value *τ*(*t*) so that the driving module 30 may generate a torque (e.g., an assistance torque or a resistance torque). The driving module 30 may generate a torque and provide the torque to the user, and the user may perform an exercise.

In operation 1020, the wearable device 120 may determine whether a degradation of the driving module 30 occurs at a predetermined level or higher based on the calculated numerical value. For example, when the calculated numerical value is less than a predetermined value (e.g., 15%), the processor 310 may determine that the degradation of the driving module 30 does not occur at the predetermined level or higher. When the calculated numerical value is greater than or equal to the predetermined value (e.g., 15%), the processor 310 may determine that the degradation of the driving module 30 occurs at the predetermined level or higher.

In response to the determination that the degradation of the driving module 30 occurs at the predetermined level or higher, the processor 310 may provide a notification, in operation 1030. The notification may correspond to a notification about the degradation of the driving module 30. The notification may include, for example, at least one of a motor replacement notification or a notification indicating that a visit to a service center is needed. The notification may be at least one of a visual notification, an auditory notification, or a tactile notification. According to an embodiment, the wearable device 120 may provide the notification to the user through at least one of the sound output module (e.g., a speaker) of the wearable device 120, the electronic device 110, or the other wearable device 130 (e.g., the wireless earphones 131 or the smart watch 132).

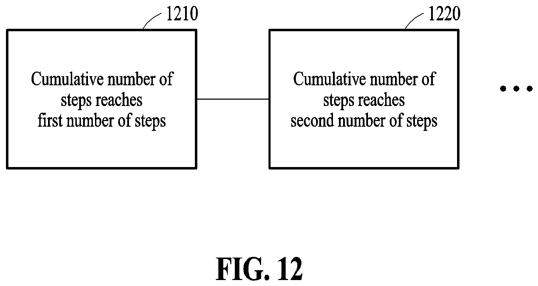

FIG. 12 is a diagram illustrating another example of an operation of a wearable device according to an embodiment.

According to an embodiment, the wearable device 120 (e.g., the processor 310) may accumulate the number of steps of a user who performs an exercise.

Referring to FIG. 12, in operation 1210, the wearable device 120 may determine that the cumulative number of steps of the user reaches a first number of steps (e.g., 1.8 million steps).

When the cumulative number of steps of the user reaches the first number of steps (e.g., 1.8 million), the wearable device 120 may determine whether a degradation of the driving module 30 occurs at a predetermined level or higher (or whether an inspection of the driving module 30 is needed) based on angular acceleration values of a first joint and angular acceleration values of a second joint obtained for a predetermined time interval (e.g., "2" minutes) (hereinafter, referred to as the "sixth time interval").

For example, the processor 310 may receive, for the sixth time interval, the angular acceleration values of the first joint from the angle sensor 320 and the angular acceleration values of the second joint from the angle sensor 320-1. The processor 310 may calculate the average value of the angular acceleration values of the first joint and the average value of the angular acceleration values of the second joint in the sixth time interval. The processor 310 may calculate a numerical value indicating how much greater the average value of the angular acceleration values of the first joint in the sixth time interval is than the average value of the angular acceleration values of the second joint in the sixth time interval. The processor 310 may determine whether the calculated numerical value is greater than or equal to a first value (e.g., 15%) that is set corresponding to the first number of steps. When the calculated numerical value is less than the first value (e.g., 15%) that is set corresponding to the first number of steps, the processor 310 may determine that the degradation of the driving module 30 does not occur at the predetermined level or higher (or that an inspection of the driving module 30 is not needed). When the calculated numerical value is greater than or equal to the first value (e.g., 15%) that is set corresponding to the first number of steps, the processor 310 may determine that the degradation of the driving module 30 occurs at the predetermined level or higher (or that an inspection of the driving module 30 is needed). The processor 310 may control to provide the user with a notification indicating that an inspection of the driving module 30 is needed.

In operation 1220, the wearable device 120 may determine that the cumulative number of steps of the user reaches a second number of steps (e.g., 3.7 million steps).

When the cumulative number of steps of the user reaches the second number of steps (e.g., 3.7 million), the wearable device 120 may determine whether a degradation of the driving module 30 occurs at a predetermined level or higher (or whether an inspection of the driving module 30 is needed) based on angular acceleration values of a first joint and angular acceleration values of a second joint obtained for a predetermined time interval (e.g., "2" minutes) (hereinafter, referred to as the "seventh time interval").

For example, the processor 310 may receive, for the seventh time interval, the angular acceleration values of the first joint from the angle sensor 320 and the angular acceleration values of the second joint from the angle sensor 320-1. The processor 310 may calculate the average value of the angular acceleration values of the first joint and the average value of the angular acceleration values of the second joint in the seventh time interval. The processor 310 may calculate a numerical value indicating how much greater the average value of the angular acceleration values of the first joint in the seventh time interval is than the average value of the angular acceleration values of the second joint in the seventh time interval. The processor 310 may determine whether the calculated numerical value is greater than or equal to a second value (e.g., 20%) that is set corresponding to the second number of steps. When the calculated numerical value is less than the second value (e.g., 20%), the processor 310 may determine that the degradation of the driving module 30 does not occur at the predetermined level or higher (or that an inspection of the driving module 30 is not needed). When the calculated numerical value is greater than or equal to the second value (e.g., 20%), the processor 310 may determine that the degradation of the driving module 30 occurs at the predetermined level or higher (or that an inspection of the driving module 30 is needed). The processor 310 may control to provide the user with at least one of a notification indicating that an inspection of the driving module 30 is needed or a notification indicating that the wearable device 120 needs to be inspected at a service center.

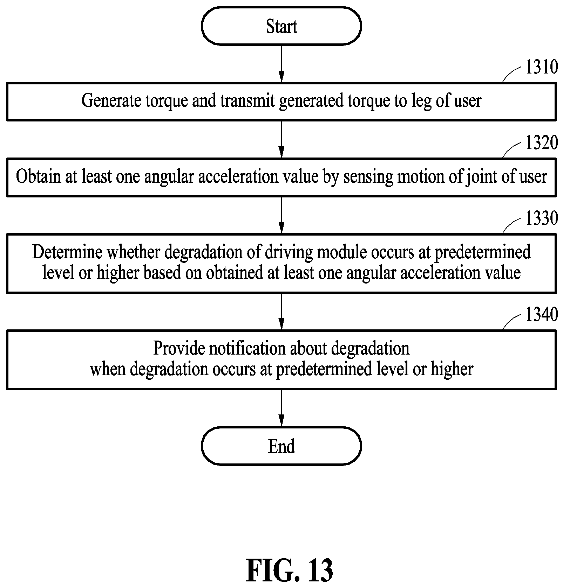

FIG. 13 is a flowchart illustrating an example of an operating method of a wearable device according to an embodiment.

Referring to FIG. 13, in operation 1310, the wearable device 120 may generate a torque and transmit the generated torque to a leg of a user.

In operation 1320, the wearable device 120 may obtain at least one angular acceleration value by sensing a motion of a joint of the user.

In operation 1330, the wearable device 120 may determine whether a degradation of the driving module 30 occurs at a predetermined level or higher based on the obtained at least one angular acceleration value.

In operation 1340, the wearable device 120 may provide a notification about the degradation when the degradation of the driving module 30 occurs at the predetermined level or higher.

The embodiments described with reference to FIGS. 1 to 12 may apply to the operating method of the wearable device 120 of FIG. 13.

Each embodiment herein may be used in combination with any other embodiment(s) described herein.

According to an embodiment, a wearable device 120, 200, 300, 300-1 to be worn on a body of a user may include a driving module (e.g., a driving module 30) configured to generate a torque, an angle sensor (e.g., an angle sensor 320 and/or an angle sensor 320-1) configured to obtain at least one angular acceleration value by sensing a motion of a joint of the user, and a processor 310 configured to control the driving module to generate the torque, receive the obtained at least one angular acceleration value from the angle sensor, determine whether a degradation of the driving module occurs at a predetermined level or higher based on the received at least one angular acceleration value, and control to provide a notification about the degradation to the user in response to the determination that the degradation occurs at the predetermined level or higher.

According to an embodiment, the processor may be further configured to determine a feature value based on at least one of angular acceleration values received from the angle sensor for a predetermined time interval, determine an increase rate of the determined feature value compared to a reference angular acceleration value, and determine that the degradation occurs at the predetermined level or higher when the determined increase rate is greater than or equal to a predetermined ratio.

According to an embodiment, the feature value may include a maximum value, a minimum value, or an average value of the received angular acceleration values.

According to an embodiment, the processor may be further configured to determine the reference angular acceleration value (e.g., a first reference angular acceleration value, a second reference angular acceleration value, or a third reference angular acceleration value) based on at least one of angular acceleration values received from the angle sensor for an initial time interval.

According to an embodiment, the initial time interval may correspond to a time interval from a first initial timepoint at which the user wears the wearable device and starts an exercise to a second initial timepoint.

According to an embodiment, the processor may be further configured to check whether a cumulative number of steps of the user reaches a determined number, determine an increase rate of the received at least one angular acceleration value compared to a reference angular acceleration value, determine whether the determined increase rate is greater than or equal to a ratio corresponding to the determined number (e.g., at least one of the ratios that are set corresponding to the first to fourth numbers of steps, respectively, described with reference to FIG. 9) when the cumulative number of steps of the user reaches the determined number (e.g., at least one of the first to fourth numbers of steps of FIG. 9), and determine that the degradation occurs at the predetermined level or higher in response to the determination that the determined increase rate is greater than or equal to the increase rate corresponding to the determined number.

According to an embodiment, the processor may be further configured to calculate a numerical value indicating how much greater an angular velocity value of a joint of a leg of the user is than an angular velocity value of a joint of the other leg of the user, and determine that the degradation occurs at the predetermined level or higher when the calculated numerical value exceeds a determined value.

According to an embodiment, the notification may include a notification indicating at least one of an inspection or replacement of a motor of the driving module.

According to an embodiment, the processor may be further configured to control to provide the notification to the user through at least one of an electronic device (e.g., an electronic device 110 or another wearable device 130) of the user or the wearable device.

According to an embodiment, a wearable device 120, 200, 300, 300-1 to be worn on a body of a user may include a driving module 30 configured to generate a torque, an angle sensor 320 configured to obtain angular acceleration values by sensing a motion of a joint of the user, and a processor 310. The processor may be configured to control the driving module to generate the torque, receive the obtained angular acceleration values from the angle sensor, determine a feature value based on at least one of the received angular acceleration values, determine an increase rate of the determined feature value compared to a reference angular acceleration value, determine whether a degradation of the driving module occurs at a predetermined level or higher based on the determined increase rate, and control to provide a notification about the degradation to the user in response to the determination that the degradation occurs at the predetermined level or higher.

According to an embodiment, the processor may be further configured to determine that the degradation occurs at the predetermined level or higher when the determined increase rate is greater than or equal to a predetermined ratio.

According to an embodiment, the feature value may include a maximum or high value, a minimum or low value, or an average value.

According to an embodiment, the processor may be further configured to determine the reference angular acceleration value (e.g., a first reference angular acceleration value, a second reference angular acceleration value, or a third reference angular acceleration value) based on at least one of angular acceleration values received from the angle sensor for an initial time interval.

According to an embodiment, the initial time interval may correspond to a time interval from a first initial timepoint at which the user wears the wearable device and starts an exercise to a second initial timepoint.

According to an embodiment, the processor may be further configured to check whether a cumulative number of steps of the user reaches a determined number, determine whether the determined increase rate is greater than or equal to a ratio that is set corresponding to the determined number when the cumulative number of steps of the user reaches the determined number, and determine that the degradation occurs at the predetermined level or higher in response to the determination that the determined increase rate is greater than or equal to the ratio that is set corresponding to the determined number.

According to an embodiment, the processor may be further configured to calculate a numerical value indicating how much greater an angular velocity value of a joint of a leg of the user is than an angular velocity value of a joint of the other leg of the user, and determine that the degradation occurs at the predetermined level or higher when the calculated numerical value exceeds a determined value.

According to an embodiment, the notification may include a notification indicating at least one of an inspection or replacement of a motor of the driving module.

According to an embodiment, the processor may be further configured to control to provide the notification to the user through at least one of an electronic device of the user or the wearable device.

According to an embodiment, an operating method of a wearable device 120, 200, 300, 300-1 to be worn on a body of a user may include generating a torque and transmitting the generated torque to a leg of the user, obtaining at least one angular acceleration value by sensing a motion of a joint of the user, determining whether a degradation of a driving module of the wearable device occurs at a predetermined level or higher based on the obtained at least one angular acceleration value, and providing a notification about the degradation when the degradation occurs at the predetermined level or higher.

According to an embodiment, the determining may include determining a feature value based on at least one of angular acceleration values obtained for a predetermined time interval, determining an increase rate of the determined feature value compared to a reference angular acceleration value, and determining that the degradation occurs at the predetermined level or higher when the determined increase rate is greater than or equal to a predetermined ratio.

According to an embodiment, the determining may include checking whether a cumulative number of steps of the user reaches a determined number; determining an increase rate of the obtained at least one angular acceleration value compared to an reference angular acceleration value; determining whether the determined increase rate is greater than or equal to an increase rate corresponding to the determined number when the cumulative number of steps of the user reaches the determined number; and determining that the degradation occurs at the predetermined level or higher in response to the determination that the determined increase rate is greater than or equal to the increase rate corresponding to the determined number.

According to an embodiment, the determining may include calculating a numerical value indicating how much greater an angular velocity value of a joint of a leg of the user is than an angular velocity value of a joint of the other leg of the user; and determining that the degradation occurs at the predetermined level or higher when the calculated numerical value exceeds a determined value.

The units described herein may be implemented using a hardware component, a software component and/or a combination thereof. A processing device may be implemented using one or more general-purpose or special-purpose computers, such as, for example, a processor, a controller and an arithmetic logic unit (ALU), a digital signal processor (DSP), a microcomputer, a field-programmable gate array (FPGA), a programmable logic unit (PLU), a microprocessor or any other device capable of responding to and executing instructions in a defined manner. The processing device may run an operating system (OS) and one or more software applications that run on the OS. The processing device also may access, store, manipulate, process, and create data in response to execution of the software. For purpose of simplicity, the description of a processing device is used as singular; however, one skilled in the art will appreciate that a processing device may include multiple processing elements and multiple types of processing elements. For example, the processing device may include a plurality of processors, or a single processor and a single controller. In addition, different processing configurations are possible, such as parallel processors.

The software may include a computer program, a piece of code, an instruction, or some combination thereof, to independently or uniformly instruct or configure the processing device to operate as desired. Software and data may be embodied permanently or temporarily in any type of machine, component, physical or virtual equipment, computer storage medium or device, or in a propagated signal wave capable of providing instructions or data to or being interpreted by the processing device. The software also may be distributed over network-coupled computer systems so that the software is stored and executed in a distributed fashion. The software and data may be stored by one or more non-transitory computer-readable recording mediums.

The methods according to the above-described embodiments may be recorded in non-transitory computer-readable media including program instructions to implement various operations of the above-described embodiments. The media may also include, alone or in combination with the program instructions, data files, data structures, and the like. The program instructions recorded on the media may be those specially designed and constructed for the purposes of embodiments, or they may be of the kind well-known and available to those having skill in the computer software arts. Examples of non-transitory computer-readable media include magnetic media such as hard disks, floppy disks, and magnetic tape; optical media such as CD-ROM discs, DVDs, and/or Blue-ray discs; magneto-optical media such as optical discs; and hardware devices that are specially configured to store and perform program instructions, such as read-only memory (ROM), random access memory (RAM), flash memory (e.g., USB flash drives, memory cards, memory sticks, etc.), and the like. Examples of program instructions include both machine code, such as produced by a compiler, and files containing higher-level code that may be executed by the computer using an interpreter.

The above-described devices may be configured to act as one or more software modules in order to perform the operations of the above-described examples, or vice versa.

A number of embodiments have been described above. Nevertheless, it should be understood that various modifications may be made to these embodiments. For example, suitable results may be achieved if the described techniques are performed in a different order, and/or if components in a described system, architecture, device, or circuit are combined in a different manner, or replaced or supplemented by other components or their equivalents.

Therefore, other implementations, other embodiments, and/or equivalents of the claims are within the scope of the following claims.

While the disclosure has been illustrated and described with reference to various embodiments, it will be understood that the various embodiments are intended to be illustrative, not limiting. It will further be understood by those skilled in the art that various changes in form and detail may be made without departing from the true spirit and full scope of the disclosure, including the appended claims and their equivalents. It will also be understood that any of the embodiment(s) described herein may be used in conjunction with any other embodiment(s) described herein.

## Claims

1. A wearable device (120; 200; 300; 300-1) to be worn on a body of a user, the wearable device comprising:
a driving module (30), comprising a motor and/or circuitry, configured to generate a torque;
an angle sensor (320) configured to obtain at least one angular acceleration value by sensing a motion of a joint of the user; and
at least one processor (310), comprising processing circuitry, individually and/or collectively configured to control the driving module to generate the torque, receive the obtained at least one angular acceleration value from the angle sensor, determine whether a degradation of the driving module occurs at a predetermined level or higher based on the received at least one angular acceleration value, and control to provide a notification about the degradation to the user in response to the determination that the degradation occurs at the predetermined level or higher.

2. The wearable device of claim 1, wherein at least one processor is individually and/or collectively configured to determine a feature value based on at least one of angular acceleration values received from the angle sensor for a predetermined time interval, determine an increase rate of the determined feature value compared to a reference angular acceleration value, and determine that the degradation occurs at the predetermined level or higher when the determined increase rate is greater than or equal to a predetermined ratio.

3. The wearable device of claim 2, wherein the feature value comprises at least one of a maximum value, a minimum value, or an average value of the received angular acceleration values.

4. The wearable device of claim 2, wherein at least one processor is individually and/or collectively configured to determine the reference angular acceleration value based on at least one of angular acceleration values received from the angle sensor for an initial time interval.

5. The wearable device of claim 4, wherein the initial time interval corresponds to a time interval from a first initial timepoint at which the user wears the wearable device and starts an exercise to a second initial timepoint.

6. The wearable device of any of claims 1 to 5, wherein at least one processor is individually and/or collectively configured to check whether a cumulative number of steps of the user reaches a determined number, determine an increase rate of the received at least one angular acceleration value compared to an reference angular acceleration value, determine whether the determined increase rate is greater than or equal to an increase rate corresponding to the determined number when the cumulative number of steps of the user reaches the determined number, and determine that the degradation occurs at the predetermined level or higher in response to the determination that the determined increase rate is greater than or equal to the increase rate corresponding to the determined number.

7. The wearable device of any of claims 1 to 6, wherein at least one processor is individually and/or collectively configured to calculate a numerical value indicating how much greater an angular velocity value of a joint of a leg of the user is than an angular velocity value of a joint of the other leg of the user, and determine that the degradation occurs at the predetermined level or higher when the calculated numerical value exceeds a determined value.

8. The wearable device of any of claims 1 to 7, wherein the notification comprises a notification indicating at least one of an inspection or replacement of a motor of the driving module.

9. The wearable device of any of claims 1 to 8, wherein at least one processor is individually and/or collectively configured to control to provide the notification to the user through at least one of an electronic device of the user or the wearable device.

10. An operating method of a wearable device (120; 200; 300; 300-1) to be worn on a body of a user, the operating method comprising:
generating a torque and transmitting the generated torque to a leg of the user;
obtaining at least one angular acceleration value by sensing a motion of a joint of the user;
determining whether a degradation of a driving module of the wearable device occurs at a predetermined level or higher based on the obtained at least one angular acceleration value, wherein the driving module comprises a motor and/or circuitry; and
providing a notification about the degradation when the degradation occurs at the predetermined level or higher.

11. The operating method of claim 10, wherein the determining comprises:
determining a feature value based on at least one of angular acceleration values obtained for a predetermined time interval;
determining an increase rate of the determined feature value compared to a reference angular acceleration value; and
determining that the degradation occurs at the predetermined level or higher when the determined increase rate is greater than or equal to a predetermined ratio.

12. The operating method of claim 11, wherein the feature value comprises at least one of a maximum value, a minimum value, or an average value of the obtained angular acceleration values.

13. The operating method of claim 11, further comprises determining the reference angular acceleration value based on at least one of angular acceleration values obtained from the angle sensor for an initial time interval.

14. The operating method of claim 10, wherein the determining comprises:
checking whether a cumulative number of steps of the user reaches a determined number;
determining an increase rate of the obtained at least one angular acceleration value compared to an reference angular acceleration value;
determining whether the determined increase rate is greater than or equal to an increase rate corresponding to the determined number when the cumulative number of steps of the user reaches the determined number; and
determining that the degradation occurs at the predetermined level or higher in response to the determination that the determined increase rate is greater than or equal to the increase rate corresponding to the determined number.

15. The operating method of claim 10, wherein the determining comprises:
calculating a numerical value indicating how much greater an angular velocity value of a joint of a leg of the user is than an angular velocity value of a joint of the other leg of the user; and
determining that the degradation occurs at the predetermined level or higher when the calculated numerical value exceeds a determined value.
